# EUROPEAN PATENT APPLICATION

(11) **EP 4 102 734 A1**
(43) Date of publication of application: **14.12.2022**
(21) Application number: 22176114.1
(22) Date of filing: 30.05.2022
(51) Int. Cl.: H04B 7/08, H04B 7/06

(54) **AN APPARATUS THAT SUPPORTS SPATIAL DIVERSITY, AT LEAST AT RECEPTION**

(30) Priority: 09.06.2021 FI 20215670
(71) Applicant: Nokia Technologies Oy, 02610 Espoo (FI)
(72) Inventor: OLESEN, Poul, Støvring (DK); NIELSEN, Kim, Storvorde (DK); SVENDSEN, Simon, Aalborg (DK); RYSGAARD, Bent Henneberg, Aalborg (DK)
(74) Representative: Nokia EPO representatives

(57) **Abstract**

An apparatus comprising
a planar printed circuit board comprising at least receiver circuitry;
a plurality of directional antennas that have radiation patterns that cover a respective plurality of partially overlapping sectors that extend outwardly from the printed circuit board;
control circuitry for controlling a discovery process for discovering availability of multiple radio links comprising means for:
receiving a plurality of quality measurements for signals received via the respective plurality of directional antennas; and
selecting directional antennas for communicating data via radio links based on the plurality of quality measurements.

## Description

### TECHNOLOGICAL FIELD

Embodiments of the present disclosure relate to an apparatus that supports spatial diversity, at least at reception. Some embodiments of the present disclosure relate to an apparatus that supports spatial diversity, at reception and at transmission.

### BACKGROUND

Modern telecommunication systems use spatial diversity for transmission and/or reception. This can be used at transmission to transfer the same information down different spatial channels or to spread information over different channels to increase information transfer rates. It can be used at reception to receive multipath signals comprising the same information or to receive the same or different information transmitted in diverse spatial channels.

Modern telecommunication systems can use phased delay antennas to control a shape of a radiation pattern associated with the antenna to form a beam that can be directed. The beam has a narrow spread and a very high gain. A phased delay antenna typically comprises a one- or two-dimensional array of antenna elements each of which is associated with an individually controllable gain and an individually controllable phase delay. The phased delay antenna uses variable constructive interference of wavefronts to move the beam.

Modern telecommunication standards can require that spatial diversity of transmission and reception is used to support multiple input multiple output (MIMO).

Modern telecommunication standards can require that beam forming at transmission and reception is used, at least at base stations, to support massive multiple input multiple output (mMIMO).

MIMO and mMIMO are typically controlled by the network.

### BRIEF SUMMARY

According to various, but not necessarily all, embodiments there is provided an apparatus comprising
a planar printed circuit board comprising at least receiver circuitry;
a plurality of directional antennas that have radiation patterns that cover a respective plurality of partially overlapping sectors that extend outwardly from the printed circuit board;
control circuitry for controlling a discovery process for discovering availability of multiple radio links comprising means for:
   receiving a plurality of quality measurements for signals received via the respective plurality of directional antennas; and
   selecting directional antennas for communicating data via radio links based on the plurality of quality measurements.

According to various, but not necessarily all, embodiments there is provided an apparatus comprising
a planar printed circuit board comprising at least receiver circuitry;
a plurality of directional antennas, wherein the plurality of directional antennas are configured to provide radiation patterns covering a respective plurality of partially overlapping sectors that extend outwardly from the printed circuit board;
control circuitry for controlling a discovery process for discovering availability of multiple radio links comprising circuitry configured to:
   receive a plurality of quality measurements for signals received via the respective plurality of directional antennas; and
   select directional antennas for communicating data via radio links based on the plurality of quality measurements.

According to various, but not necessarily all, embodiments there is provided an apparatus comprising
a planar printed circuit board comprising at least receiver circuitry;
a plurality of directional antennas, at least one of the plurality of directional antennas is configured to provide a radiation pattern, wherein the radiation pattern is configured to at least partially overlap a further radiation pattern provided by at least one other directional antenna of the plurality of directional antennas, wherein the radiation patterns extend outwardly from the printed circuit board;
control circuitry for controlling a discovery process for discovering availability of multiple radio links comprising means for:
   receiving a plurality of quality measurements for signals received via the respective plurality of directional antennas; and
   selecting directional antennas for communicating data via radio links based on the plurality of quality measurements.

The apparatus can be a radio frequency apparatus that is capable of operating at radio frequencies.

In some, but not necessarily all examples, the plurality of directional antennas have radiation patterns that have fixed directions relative to the planar printed circuit board that are not altered by phase control.

In some, but not necessarily all examples, the plurality of directional antennas have a common configuration except for position and orientation.

In some, but not necessarily all examples, the plurality of directional antennas have a Yagi Uda configuration and comprise a dipole element, at least one reflector element and at least one director element.

In some, but not necessarily all examples, the plurality of directional antennas are configured for operation above 10GHz.

In some, but not necessarily all examples, the plurality of directional antennas are arranged on the planar printed circuit board to have N-fold rotational symmetry about an axis that is orthogonal to a plane of the planar printed circuit board.

In some, but not necessarily all examples, the quality measurements for signals received are received signal strength measurement or parameters dependent upon received signal strength measurements.

In some, but not necessarily all examples, means for selecting directional antennas for communicating data via radio links based on the plurality of quality measurements comprises:
means for selecting an antenna that is best for receiving a received structured signal transmitted by a transmitter, for receiving structured signals transmitted by the transmitter.

In some, but not necessarily all examples, means for selecting directional antennas for communicating data via radio links based on the plurality of quality measurements comprises:
means for preventing selection of an antenna that receives noise above a threshold level.

In some, but not necessarily all examples, the apparatus further comprises a display, wherein the control circuitry is configured to display information in dependence upon the received quality measurements and/or the antenna selection.

In some, but not necessarily all examples, the apparatus further comprises a display, wherein the control circuitry is configured to display a direction of maximum gain for radiation patterns of directional antennas used for data communication.

In some, but not necessarily all examples, the apparatus further comprises a plurality of amplifiers each being associated with at least one of the plurality of directional antennas.

In some, but not necessarily all examples, the amplifiers of the directional antennas remain powered on irrespective of whether or not the antenna associated with an amplifier is selected for data communication.

In some, but not necessarily all examples, the apparatus further comprises a heat sink. In at least some examples, the heat sink can have rotational symmetry. In at least some examples, the heat sink can be continuous heat sink. In at least some examples, the heat sink has rotational symmetry about an axis that is orthogonal to a plane of a circuit board comprising the amplifiers.

In some, but not necessarily all examples, the heat sink has a conductive body with a central void, wherein the conductive body is aligned with the amplifiers and the void is not aligned with the amplifiers.

In some, but not necessarily all examples, the apparatus further comprises a fan and the central void provides a conduit for fan-assisted air-flow over fins of the heat sink. Apertures between the fins can, in some examples, provide symmetrically arranged vents for the air-flow. The air-flow can be blocked and re-directed through the apertures and over the fins by a circuit board.

In some, but not necessarily all examples, the heat sink is on one side of a circuit board and the amplifiers are on a different, opposite, side of the circuit board. In some examples, conductive vias extend through the circuit board from the heat sink.

In some, but not necessarily all examples, the apparatus further comprises at least receiver circuitry associated with the plurality of directional antennas, the receiver circuitry being configured to use at least one programmable local oscillator and configured for processing received signal that have a frequency in excess of 10GHz.

In some, but not necessarily all examples, the apparatus is configured as an Ultra-Reliable Low-Latency Communication (URLLC).

According to various, but not necessarily all examples, a portable electronic device or a stationary electronic device comprises the apparatus.

According to various, but not necessarily all, embodiments there is provided examples as claimed in the appended claims.

### BRIEF DESCRIPTION

Some examples will now be described with reference to the accompanying drawings in which:
FIG. 1 shows an example of an apparatus;
FIG. 2 shows an example of a circuit board;
FIG 3 shows an example of a system comprising an apparatus;
FIG 4 shows an example of a fixed antenna radiation pattern;
FIGs 5 shows an example of a directional antenna;
FIGs 6A shows an example of an apparatus with directional antennas and also a heat sink;
FIGs 6B to 6D show example of heat sinks;
FIG 7 shows an example of an apparatus with fan assisted cooling using a heat sink;
FIG 8 shows a system comprising an apparatus;
FIG 9 shows an example of an apparatus controlling a display;
FIG 10A shows an example of an apparatus controlling a display
FIG 10B shows an example of an apparatus controlling a display
FIG 11 shows an example of a planar circuit board comprising a plurality of directional antennas;
FIGs 12A, 12B, 12C show an example of a combination of a planar circuit board and a heat sink;
FIGs 13A, 13B, 13C show different examples of apparatus in operation; and
FIGs 14 to 21 show different examples of a planar circuit board comprising a plurality of directional antennas.

### DETAILED DESCRIPTION

The following description and the drawings relate to different examples of an apparatus 10 comprises:
a planar printed circuit board 30 comprising at least receiver circuitry 60;
a plurality of directional antennas 40 that have radiation patterns 50 that cover a respective plurality of partially overlapping sectors that extend outwardly from the printed circuit board 30;
control circuitry 20 for controlling a discovery process for discovering availability of multiple radio links 102 comprising means for:
   receiving a plurality of quality measurements for signals received via the respective plurality of directional antennas 40; and
   selecting directional antennas 40 for communicating data via radio links 102 based on the plurality of quality measurements.

The apparatus 10 can therefore achieve selective spatial diversity by selection of directional antennas 40 via a single planar circuit board 30.

The radiation patterns 50 can be fixed (static) or semi-static, that is determined by a physical arrangement of antenna elements. The radiation patterns 50 are not or need not be controlled by phased delay. The apparatus 10 can therefore achieve selective spatial diversity by selection of fixed-pattern directional antennas 40 via a single planar circuit board 30.

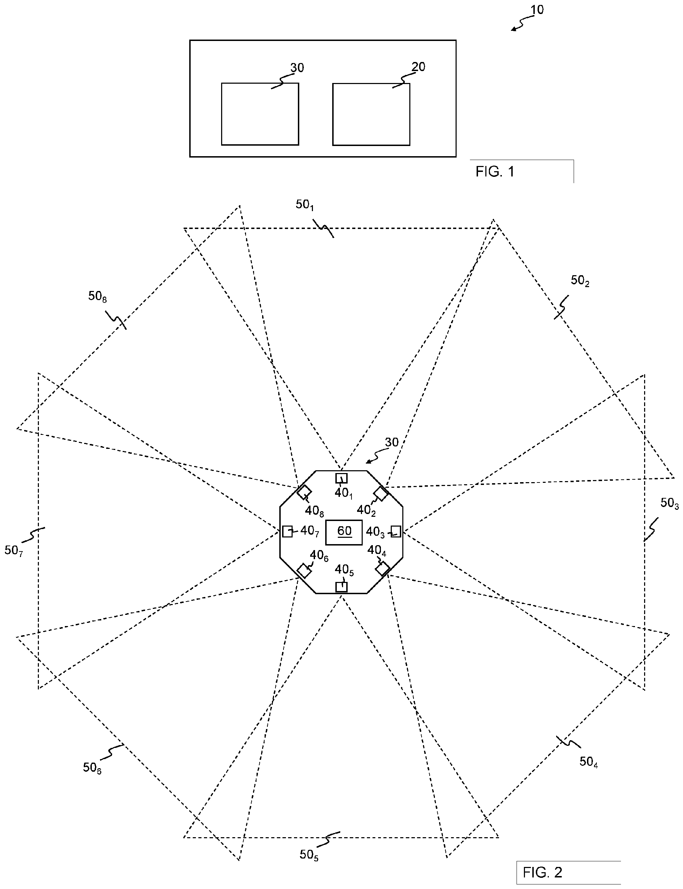

FIG 1 illustrates an example of an apparatus 10 comprising a planar printed circuit board 30 and control circuitry 20 for controlling a discovery process for discovering availability of multiple radio links.

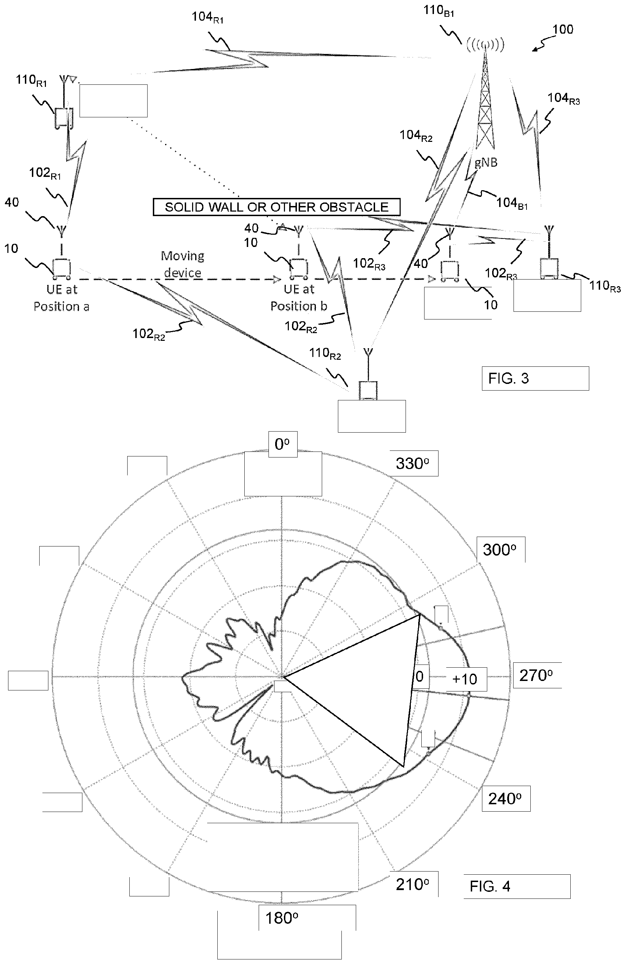

FIG 3 illustrates an example of the apparatus 10 in an environment 100 where it can have multiple radio links 102, 104. In this example, but not necessarily all examples, the links 102,104 are between the apparatus 10 and different access points 110. The access points 110 can comprise one or more base stations 110_{Bi} and or one or more relay stations 110_{R} to the base station(s) 110_{Bi} or another base station 110_{Bj}.

In the example illustrated, at time t1, the apparatus 10 is at position a. The apparatus 10 has a link 102_{R1} to relay station 110_{R1} and has a link 102_{R2} to relay station 110_{R2}. The relay station 110_{R1} has an onward link 104_{R1} to the base station 110_{B1}. The relay station 110_{R2} has an onward link 104_{R2} to the base station 110_{B1}. The links 102_{R1}, 104_{R1} can, in at least some examples, operate in parallel to the links 102_{R2}, 104_{R2}, for example, the links and 102_{R1}, 102_{R2} can operate simultaneously.

At time t2, the apparatus 10 is at position b. The apparatus 10 cannot form a link to the relay station 110_{R1}. The apparatus 10 has a link 102_{R2} to relay station 110_{R2} and has a link 102_{R3} to relay station 110_{R3}. The relay station 110_{R2} has an onward link 104_{R2} to the base station 110_{B1}. The relay station 110_{R3} has an onward link 104_{R3} to the base station 110_{B1}. The links 102_{R2}, 104_{R2} can, in at least some examples, operate in parallel to the links 102_{R3}, 104_{R3}, for example, the links and 102_{R2}, 102_{R3} can operate simultaneously.

At time t3, the apparatus 10 is at position c. The apparatus 10 can form a link 104_{B1} directly to the base station 110_{B1}. The apparatus 10 has a link 102_{R3} to relay station 110_{R3} and has a link 104_{B1} to the base station 110_{B1}. The relay station 110_{R3} has an onward link 104_{R3} to the base station 110_{B1}. The links 102_{R3}, 104_{R3} can, in at least some examples, operate in parallel to the link 104_{B1}, for example, the links 104_{B1}, 102_{R3}, 104_{R3} can operate simultaneously.

The apparatus 10 receives signals via the respective plurality of directional antennas 40. Depending on quality measurements for those received signals, the apparatus 10 selects antennas 40 for communicating data via radio links 102. Thus, data links 102 can be formed and unformed or used and not used as the quality of the links 102 varies.

Some or all links can be created but only used when the quality of the link is sufficiently high. Alternatively, some or all links can be created only when the quality of the link would be sufficiently high.

In one example, at time t1, the links 104_{B1}, 102_{R3} are of lower quality and are not used for data transfer. The links 102_{R1}, 102_{R2} are of higher quality and are used for data transfer. At time t2, the links 104_{B1}, 102_{R1} are of lower quality and are not used for data transfer. The links 102_{R2}, 102_{R3} are of higher quality and are used for data transfer. At time t3, the links 102_{R1}, 102_{R2} are of lower quality and are not used for data transfer. The links 104_{B1}, 102_{R3} are of higher quality and are used for data transfer.

In another examples, at time t1, the links 104_{B1}, 102_{R3} would be of lower quality and are not created. The links 102_{R1}, 102_{R2} would be of higher quality and are created for data transfer. At time t2, the links 104_{B1}, 102_{R1} would be of lower quality and are not created. The links 102_{R2}, 102_{R3} would be of higher quality and are created for data transfer. At time t3, the links 102_{R1}, 102_{R2} would be of lower quality and are not created. The links 104_{B1}, 102_{R3} would be of higher quality and are created for data transfer.

FIG 2 illustrates the planar printed circuit board 30.

The planar printed circuit board 30 comprises at least receiver circuitry 60. The circuitry 60 is configured at least to operate as a receiver. In some examples, but not necessarily all examples the circuitry 60 is configured at least to operate as a transceiver that is, as a receiver and as a transmitter.

The apparatus 10, or in this example, the planar printed circuit board 30 comprises a plurality of directional antennas 40 that have radiation patterns 50 that cover a respective plurality of partially overlapping sectors that extend outwardly from the printed circuit board 30.

The directional antennas 40 have direction because their radiation patterns 50 are spatially asymmetric. This radiation pattern has a front or main lobe(s) in the forward (boresight) direction, side lobe(s) and back lobe(s). The front/main lobe(s) extend away from a perimeter of the circuit board 30 in boresight from each individual antenna to form a 'beam'.

The radiation pattern 50 forms a beam that has a spatial spread. In this example the spread of the radiation pattern 50, parallel to the plane of the circuit board 30, is greater than 45°. The radiation patterns 50 from the eight directional antennas 40 partially overlap and provide 360° coverage parallel to the plane of the circuit board 30.

In the example illustrated the circuit board 30 is octagonal. This shape is optional. However, in at least some examples the directional antennas 40 are placed at or near an exterior perimeter of the circuit board 30.

In the example illustrated the directional antennas 40 provide 360° coverage. This is optional. In the example illustrated there are eight directional antennas 40, this is optional. In the example illustrated the directional antennas 40 are the same except for orientation, this is optional.

In some examples, but not necessarily all examples there are N directional antennas 40, each of which has a radiation pattern (beam) that covers a segment that subtends, at a common origin, an angle greater than 360° /N at a defined distance from the origin. In some examples, N is between 4 and 12. In some examples, but not necessarily all examples the arrangement of N directional antennas 40, has N-fold rotation symmetry about an axis that is orthogonal to a plane of the planar printed circuit board 30 and that passes through the common origin, i.e. the arrangement is invariant under a rotation of 360° /N about that origin.

The N directional antennas 40 can be arranged such that they are located and oriented relative to one another to provide a plurality of antennas that form a suitable shape such as hexagon, octagon, hexa decagon, equiangular polygon, square, circle. For example, if omnidirectional coverage is required, the N directional antennas 40 can be arranged in any suitable shape that provides omnidirectional coverage

The control circuitry 20 is configured for controlling a discovery process for discovering availability of multiple radio links 102. The control circuitry 20 is configured to receive a plurality of quality measurements for signals received via the respective plurality of directional antennas 40. The control circuitry 20 is configured to select one or more directional antennas 40 for communicating data via one or more radio links 102 based on the plurality of quality measurements.

Thus, the apparatus 10 comprises:
a planar printed circuit board 30 comprising at least receiver circuitry 60;
a plurality of directional antennas 40 that have radiation patterns 50 that cover a respective plurality of partially overlapping sectors that extend outwardly from the printed circuit board 30;
control circuitry 20 for controlling a discovery process for discovering availability of multiple radio links 102 comprising means for:
   receiving a plurality of quality measurements for signals received via the respective plurality of directional antennas 40; and
   selecting directional antennas 40 for communicating data via radio links 102 based on the plurality of quality measurements.

In some scenarios the environment 100 can comprise tens, hundreds or more of apparatuses 10 and/or relay stations 110.

In the example illustrated, apparatus 10 and relay station 110 are indicated as distinct apparatus. However, in this example or other examples one or more of the apparatus 10 can operate as relay stations 110 and/or one or more of the relay stations 110 can operate as apparatus 10.

In the example illustrated the base station 110_{B1} is labelled as a gNB. A gNB is a next generation node B and is a base station configured for orthogonal frequency division multipole access (OFDMA). The specifications for such access are defined in the third-generation partnership project (3GPP) specifications commonly referred to as 4G and/or 5G. The apparatus 10 can, for example, be mobile equipment or user equipment (UE) as defined by the specifications. The apparatus 10 can, for example, provide end-to-end communication. The relay apparatus 110 can, for example, provide a relay link between an apparatus 10 (UE) and a base station 110_{B} (gNB). In some examples, the apparatus 10 can operate as a relay station for another apparatus 10 (not illustrated).

The links 102_{Ri} to a relay station 110_{Ri} can, for example, be via side link communication (PC5) interface. The links 102_{Ri} can, for example, be controlled using the Side Link Traffic Channel (STCH) and the Side Link Broadcast Control Channel (SBCCH). The data can be transported over links 102_{Ri} using a Physical Side Link Shared Channel (PSSCH).

The presence of multiple directional antennas 40 can in some examples, enable transmission diversity at the apparatus 10 and/or reception diversity at the apparatus 10. The presence of multiple directional antennas 40 can in some examples, enable multiple input multiple output (MIMO). For example, multiple directional antennas 40 can enable multiple input (MI) from the downlink and/or multiple output (MO) into the uplink. A single data stream can be divided across the multiple directional antennas 40 for transmission and/or a single data stream can be created from combining data received across multiple directional antennas 40.

In some examples, the apparatus 10 is configured as an Ultra-Reliable Low-Latency Communication (URLLC) apparatus that is capable of multiple parallel connections (good reliability) using 240 kHz or 120 kHz sub carrier spacing (low latency). For example, the apparatus 10 can be configured to satisfy one or more of the requirements defined by a row of the following table:

| Communication service availability: target value | Transfer interval: target value | Apparatus (UE) speed | # of apparatus (UE) | Service area |
|---|---|---|---|---|
| 99.999 % to 99.999 99 % | 500 µs | ≤ 75 km/h | ≤ 20 | 50 m × 10 m × 10 m |
| 99.999 9 % to 99.999 999 % | 1 ms | ≤ 75 km/h | ≤ 50 | 50 m × 10 m × 10 m |
| 99.999 9 % to 99.999 999 % | 2 ms | ≤ 75 km/h | ≤ 100 | 50 m × 10 m × 10 m |

The apparatus 10 can therefore operate with high reliability (≥99.999 %).

The apparatus 10 can therefore operate with low latency (≤2ms).

The apparatus 10 can therefore operate while moving at speed (≤75 km/h).

The apparatus 10 can therefore operate in the presence of multiple other apparatus (≤100) over a large area (5000m²). The other apparatuses can be stationary or moving.

The density of other apparatus can be large e.g. 1 per 50-250 m².

The use of directional antennas 40 increases a communication range in a particular direction. However, directional antennas 40 (and their beams) make the communication more sensitive to physical obstacles, so the communication link 102 might drop significantly or even break if there is no line-of-sight between transmitter and receiver. Such a drop in quality might happen very suddenly in a dynamic environment 100 where either the apparatus or potential obstacles (e.g. other apparatus 10, or other objects) are moving.

The apparatus 10 can in some examples move by translation and/or rotation. The translation can be in one, two or three dimensions (x, y, z). The rotation can be in one or two orthogonal directions e.g. azimuthal angle and elevation angle. It can be desirable to provide 360° coverage in the plane of relative translational movement. This can increase the likelihood of there being one or more available links 102.

The number of simultaneous links 102 the apparatus 10 maintains (reliability target) can be dependent on a current Quality of Service (QoS) requirement and may be one, two, or more links.

The apparatus 10 enables fast discovery of available relay stations 110 and suitable links 102. This allows the apparatus 10 to maintain, at all times, the number of active links 102 needed to fulfil its reliability target. The discovery process is managed by the apparatus 10 exploiting local measurements and knowledge of detected relay stations 110 and the environment 100. This makes discovery and selection of links 102 fast and more reliable. The discovery process does not require excessive signaling but supports very fast and agile hand over and discovery processes.

While the apparatus 10 has been described with reference to a particular environment 100 in FIG 3, it should be appreciated that it has broader application. For example, the apparatus 10 and in particular the circuit board 30 can be used as a generic Radio Head applicable to any radio frequency system where there are requirements for spatial coverage. The apparatus 10 could therefore be a base station, an access point, a relay station, an apparatus for Industrial Internet of Things (IIoT), a moving robot, an unmanned aerial vehicle (UAV), a data acquisition system (DAS), transmission/reception point (TRP).

In at least some examples, the plurality of directional antennas 40 have radiation patterns 50 that have fixed directions and fixed radiation patterns 50 relative to the planar printed circuit board 30 that are not altered by phase control. The selection of an antenna 40 for use is therefore straightforwardly achieved using a switch. FIG 4 illustrates an example of a possible radiation pattern 50 for the directional antennas 40. In this example, at 28GHz, the maximum gain of the main lobe is 11.2 dBi and with a 3dB Half power beam width of 34.9°. The radiation pattern can be approximated by a segment which is an isosceles triangle that has equal sides and which subtend an angle greater than 45° at an origin.

In at least some, but not necessarily all examples, the plurality of directional antennas 40 have a common fixed configuration except for position and orientation. That is the directional antennas 40 can each replace another directional antenna 40 if its position and orientation is changed. Each directional antenna 40 has the same fixed complex impedance and the same fixed S parameters.

In at least some, but not necessarily all examples, the plurality of directional antennas 40 are planar antennas that have a planar radiator. The planar radiators of the directional antennas 40 can be coplanar, for example they can occupy a common plane that is parallel to a plane of the planar circuit board 30.

In some embodiments the antenna radiators could be non co-planar with the circuit board 30.

In both coplanar and non-coplanar implementations, the antenna radiators could be any directional antenna type such as any of, and not limited to: a lens antenna, a Yagi-Uda antenna, a broadband and frequency independent antenna (any of: a biconical, a conical, a disk cone, a bow tie, a log spiral, a conical spiral, and a log-periodic antenna) and an antenna array or panel using any fundamental antenna type, for example, a dipole, a patch, a monopole, etc.

In at least some, but not necessarily all examples, the plurality of directional antennas 40 are located at a perimeter, for example an edge, of the planar circuit board 30 at or very near an antenna feed.

The plurality of directional antennas 40 can be configured for operation above 10GHz, for example within the FR2 range defined by the 3GPP specifications.

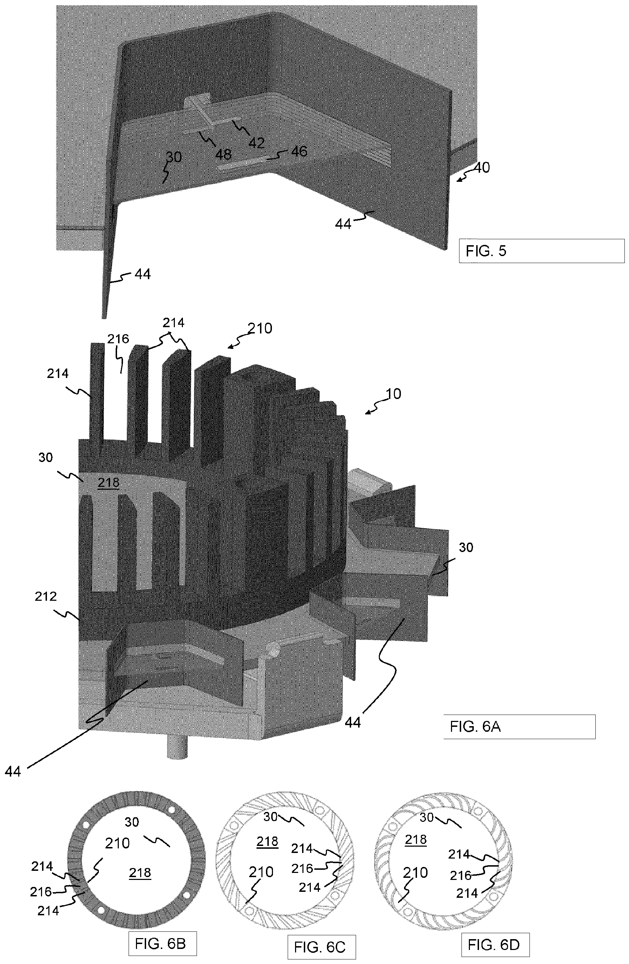

FIG 5 illustrates an example of a directional antenna 40 from a perspective view. The directional antenna 40, in this example, comprises a planar feed element 42 that extends parallel to a plane of the planar circuit board 30 and planar ground element 48 that extends parallel to a plane of the planar circuit board 30. In this example, the directional antenna 40 comprises a feed element 42 formed from a first side/layer of the planar circuit board 30 and a ground element 48 formed from a second side/layer of the planar circuit board 30. Other implementations could comprise a dipole antenna where the feed element 42 and the ground element 48 is on the same side/layer of the planar circuit board.

The feed could be a "single-ended" feed as described above (i.e. one dipole arm is grounded and the other dipole arm is coupled to the receiver and/or transmitter), or the feed could be a "balanced" feed where both dipole arms are coupled to the receiver and/or transmitter. The coupling could be made through a balun to convert the balanced feed to a single-ended feed or through balanced ports in the receiver and/or transmitter circuitry.

The coupling of the antenna to the RF circuitry maybe galvanic (direct current connection) or electromagnetic, for example capacitive and/or inductive coupling.

In the illustrated example, the directional antenna 40 (and each of the directional antennas 40) have a Yagi Uda configuration and comprise a dipole antenna (feed element 42 and ground element 48), at least one reflector element 44 and at least one director element 46. Although the example is a dipole feed element, it could also be a folded-dipole feed element.

The director element 46 is in this example formed on different sides/layers of the planar circuit board 30 and connected together with vias in the planar circuit board 30. Other implementations could comprise only one director element 46 on one side/layer of the planar circuit board 30. Other implementations could comprise multiple directors on one side/layer or both sides/layers.

In the example illustrated in FIG 5, but not necessarily all examples, the dipole antenna (feed element 42 and ground element 48), and the director element 46 are formed from a radio frequency laminate or substrate, for example a FR4 material (Flame Retardant woven glass reinforced epoxy resin), of the planar circuit board 30. Only the RF layer of the planar circuit board 30 is included in the antenna area, while the remaining FR4 layers are removed. In other examples, the radio frequency laminate or substrate may be, and are not limited to, one of: Woven Teflon Fibreglass (PTFE/Glass), Microfibre Teflon Fibreglass (PTFE/Glass), High Dielectric Ceramic Filled Teflon Glass, Alumina, Sapphire, Quartz (SiO₂) and Beryllia (BeO).

The circuit board 30 can, for example, comprise higher frequency portion(s) that can be made from one type of material (e.g. alumina) and lower frequency portion(s) can be made from a different material (e.g. FR4).

The fixed direction (shape) of the 3D radiation pattern 50 can be adjusted by redesigning the reflector shield..

FIG 6A, 6B, 6C and 6D illustrate examples of a heat sink 210. FIG 6A is a perspective view and FIGs 6B, 6C, 6D are cross-sectional views of different designs of heat sinks 210. A heat sink is a heat exchanger that transfers generated heat to a surrounding fluid.

In each of these examples, the heat sink 210 is rotationally symmetric. The heat sink 210 has rotation symmetry about an axis extending perpendicularly from a plane of a circuit board 30.

The heat sink 210, in one or more planes parallel to the plane of the planar circuit board 30, has a circular or equiangular polygon shape in cross-section. Heat dissipating parts can be evenly distributed at locations on one side of the circuit board 30 that are almost exactly where the heat sink 210 is mounted on the opposite side of the circuit board 30.

In some, but not necessarily all examples, the heat sink has a conductive body with a central void 218. The conductive body can for example have rotational symmetry. The void 218 can have rotational symmetry. The body and or the void 218 can for example have a circular of equiangular polygon shape. The void 218 can serve for various purposes like component placement, connectors, display or similar.

The heat sink 210 is mounted exactly where heat dissipating components 60 are located on the circuit board 30. The heat sink 210 is mounted on one side of the circuit board 30 and heat dissipating components 60 are located, in alignment, on the other side of the circuit board 30 opposite the body (not the void 218) of the heat sink 210.

In some but not necessarily all examples, the heat dissipating components 60 comprise amplifiers, drivers, semiconductors, transistors and/or transducers that are mounted on one side of the circuit board 30 and the heat sink 210 is mounted opposite them, in alignment, on the other side of the circuit board 30. The body (not the void 218) of the heat sink 210 is aligned with the heat-dissipating components. In this or other examples, 'always-on' circuitry is mounted on one side of the circuit board 30 and the alignment heat sink 210 is mounted opposite that circuitry, in alignment, on the other side of the circuit board 30. The body (not the void 218) of the heat sink 210 is aligned with the always-on circuitry.

Conductive vias can extend through the circuit board 30 from one side to the other and can make contact with the heat sink 210 to enhance heat conduction from the circuitry 60 on the other side of the circuit board 30 than the heat sink 210.

In at least some examples, the heat sink 210 is designed and placed such that radio frequency losses between heat dissipating transmit and receive circuitry 60 (opposite the heat sink 210) are minimized in a planar structure as the power amplifiers and low noise amplifiers, in particular, are located at or very close to the antenna feed points.

In the examples illustrated, the heat sink 210 is a continuous conductor. The heat sink has, as a body, a circumscribing conductive portion (e.g. base 212) that surrounds the central void 218 that is non-conductive. The circumscribing conductive portion 212 has rotation symmetry about an axis extending perpendicularly from the plane of the circuit board 30. The circumscribing conductive portion 212 can be a strip forming a circle (e.g. an annulus) or a regular n-sided polygon, for example a hexagon.

Fins 214 extend outwardly from a base 212 substantially perpendicularly to a plane of the flat annular base 212 and the circuit board 30. The fins 214 are arranged in spaced separation around the circumferential length of the base 212. This forms a series of apertures 216 between the adjacent fins 214. In at least some examples, the spacing between the fins is the same such that the arrangement of fins 214 has rotational symmetry. The fins 214 can cross a width of the base 212.

The fins 214 can have different shapes and widths as illustrated in FIGs 6B, 6C, 6D.

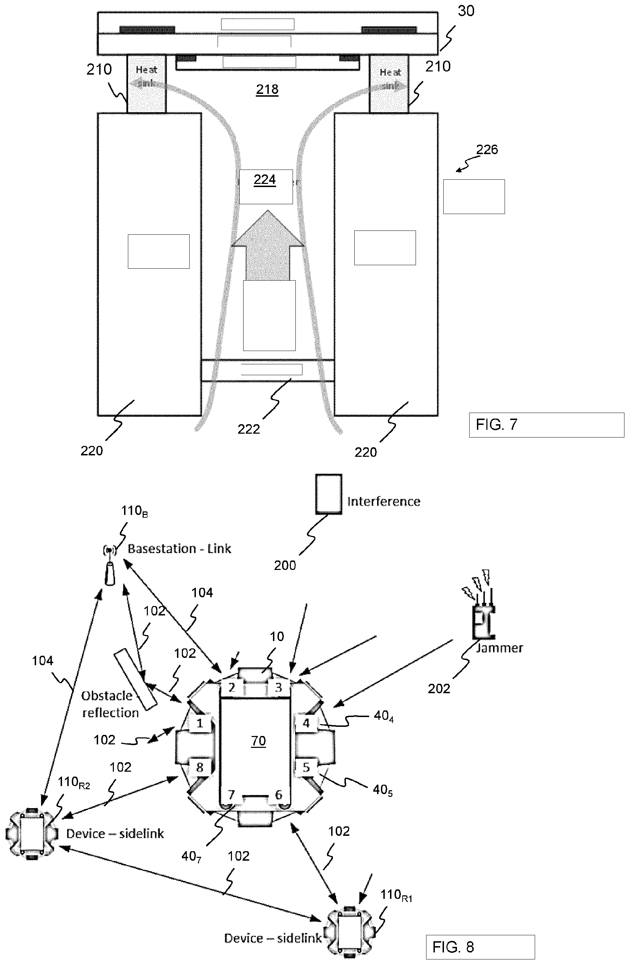

As illustrated in FIG 7, in some examples, an air-flow generated by a fan 222 is forced to pass through the apertures 216 over the fins 214 of the heat sink 210 in a symmetric manner due to an enclosure 226.

The enclosure 226 defines a conduit 224, for fan-assisted air-flow, that extends from the fan 222 towards the circuit board 30 in a direction substantially perpendicular to a plane of the circuit board 30. The central conduit 224 vents symmetrically through the apertures 216 between the fins 214 of the heat sink 210, adjacent the circuit board 30. The apertures 216 between the fins 214 provide symmetrically arranged vents for the air-flow. The enclosure 226 can be defined at least in part by the central void 218 of the heat sink 210. The heat sink 20 is placed directly on the underside of the circuit board 30 so that the air-flow is blocked by the circuit board 30 and re-directed to pass through the apertures 216 and over the fins 214. This forces an equal distribution of air-flow on all parts of the heat sink 210. In some examples, the enclosure 226 can also be defined at least in part by a central void through a stand 226 for the fan. The heat sink 210 and its fins 214 are the exit route for the air-flow created by the fan 222. In some examples, the flow of air could be reversed by reversing the fan 222.

In some examples, the antenna reflector element 44 and/or RF shielding is integrated into the heat sink 210, to obtain a large and efficient heat sink.

The heat sink 210 is mechanically very rugged and stabilizes the circuit board 30. The whole construction is therefore rugged against mechanical stress.

As previously described, the control circuitry 20 is configured for controlling the discovery process for discovering availability of multiple radio links 102. The control circuit 20 is configured to receive a plurality of quality measurements for signals received via the respective plurality of directional antennas 40 and is configured to select one or more directional antennas 40 for communicating data via respective one or more radio links 102 based on the plurality of quality measurements.

In at least some examples, the quality measurements for signals received are received signal strength measurement or parameters dependent upon received signal strength measurements.

For example, the quality measurements could be, for example, signal strength, reference signal receive power (RSRP), received signal strength indication (RSSI), reference signal receive quality (RSRQ), signal to interference plus noise ratio (SNIR).

A quality measurement can be made for each directional antenna 40. The quality measurements can be made using layer 1 (physical layer) processing. The quality measurements can be made using radio frequency circuitry located at or near the directional antenna 40.

The selection of directional antennas 40 for communicating data via radio links 102 based on the plurality of quality measurements can comprise: selecting a directional antenna 40 that is best for receiving a received structured signal transmitted by a transmitter, for receiving structured signals transmitted by the transmitter. The selection is of the directional antenna 40 that is best for receiving a received structured signal transmitted by a transmitter. The selected directional antenna 40 is then used for receiving structured signals transmitted by the transmitter.

The structured signals can for example be signals transmitted in a defined frame structure. For example, a frame of 10ms comprising 10 subframes of 1ms. In some examples, different numbers of slots or different lengths can occupy a subframe. Each slot can comprise either 7 or 14 orthogonal frequency division multiplex (OFDM) symbols. The length of a slot can vary with sub carrier spacing.

An example of selection of directional antennas 40 for communicating data via radio links 102 based on quality measurements is illustrated in FIG 8.

In this example the apparatus 10 comprises eight directional antennas 40 labelled with an index i=1 to 8. Only some of the directional antennas are labelled using 40ᵢ.

The antenna i=1 has two sources or signals, one sidelink 102 from a nearby device 110_{R2} and one link 102 from a base station 110_{B}, however, these two signals are timemultiplexed (TDD [Time Division Duplex], different resources for SL [Side Link] and Uu [Air Interface between the gNB and the UE]). Each requires decoding to identify. The signal from the base station 110_{B}, is weak. Through decoding the apparatus 10 can determine the sidelink synchronization signal and identify the weak signal of the base station 110_{B} to be a reflection, since it has a stronger, similar (but direct) signal on antenna i=2.

The antenna i=2 has a strong signal towards the base station 110_{B}. It may either be the decoded control channel or an active link 104. The SNIR is a bit affected, since a weak interferer 200 is affecting the signal. The direction of the interferer 200 becomes clear on antenna i=3.

The antenna i=3 picks up two signals. One is identified as an interferer in the sense that it follows the frame structure of 5G. For example, this interferer 200 could be another UE for a different service provider, or another base station. Inside the same received bandwidth another signal is detected of high power. This is not compliant to the frame structure and it produces wide band noise. It can be identified as noise from a jammer device 202 which produces white noise at the operational frequency of the directional antennas 40.

The antenna i=4, picks up noise. This is stronger than that of antenna i=3, but the same irregular nature. Comparison to a noise floor of the radio environment can be used to identify a noise source.

The antenna i=5 is not picking up any radio signals. It's a good candidate for determining the noise floor of the radio environment currently.

The antenna i=6 is actively in use on a sidelink 102. It's acting as a relay to the device 110_{R1} that is out of range of the base station 110_{B} currently. The device 110_{R1} has a sidelink 102 to the device 110_{R2}.

The antenna i= 7 is not picking up any radio signals. It's a good candidate for determining the noise floor.

The antenna i=8 is currently detecting another device 110_{R2} that is periodically sending and receiving sidelink synchronization information. Currently the sidelink 102 to device 110_{R2} is not in use.

The device 110_{R2} can have an active link 104 to the base station 110_{B}. The device 110_{R1} can have a two-hop link to the base station 110_{B} via the sidelink 102 between the device 110_{R1} and the device 110_{R2} and the link 104 from the device 110_{R2} to the base station 110_{B}.

The selection of the directional antennas 40 for communicating data via radio links 102 based on the plurality of quality measurements can for example comprise preventing selection of an antenna that receives noise above a threshold level. Thus, for example the antennas i=3 and i=4 could be excluded from selection because of noise from the jammer 202. Thus, for example the antennas i=3 and possibly i=2 could be excluded from selection because of noise from the interferer 200.

The selection of the directional antennas 40 for communicating data via radio links 102 based on the plurality of quality measurements can for example comprise selection of the directional antennas 40 that satisfy a quality requirement such as at least M links with a quality above a threshold value.

For example, the highest quality minimum latency link could be direct link 102 from antenna i=2 to the base station 110_{B} (dependent on effect of interference), the indirect link 102 from antenna i=1 to the base station 110_{B} (dependent on effect of reflection), the direct link 102 from antenna i=8 to the relay station 110_{R2}.

For example, the highest quality minimum latency links (plural) could be selected from direct link 102 from antenna i=2 to the base station 110_{B} (dependent on effect of interference), the indirect link 102 from antenna i=1 to the base station 110_{B} (dependent on effect of reflection), the direct link 102 from antenna i=8 to the relay station 110_{R2}, the direct link 102 from antenna i=6 to the relay station 110_{R1}.

In some examples, but not necessarily all examples the apparatus 10 can comprise a display 70. An example of a display 70 is illustrated in FIG 8.

In at least some examples, the control circuitry 20 is configured to display a direction of maximum gain for radiation patterns of directional antennas 40 used for data communication.

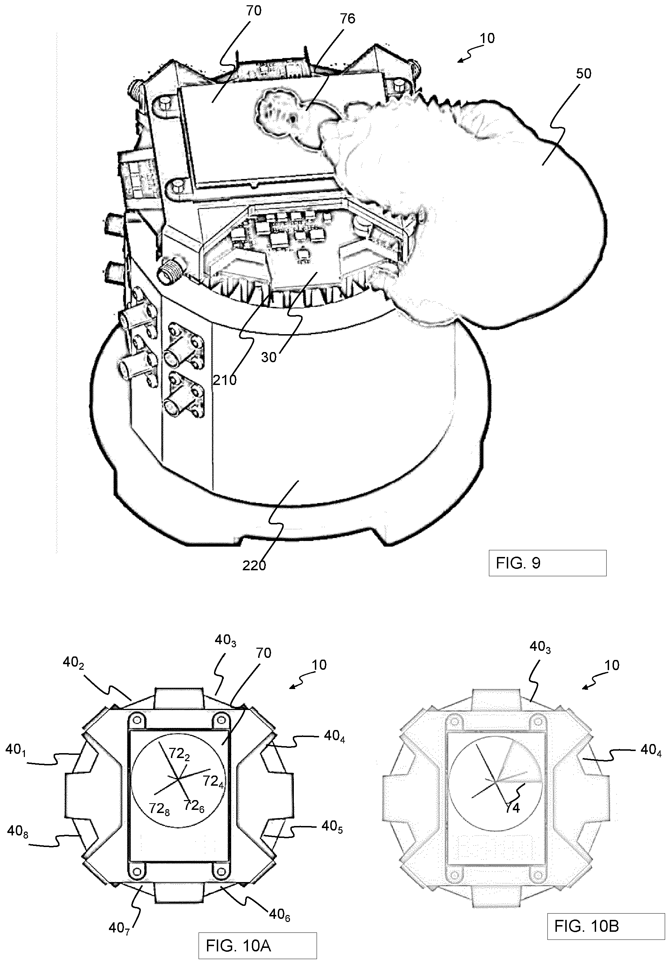

FIGs 10A and 10B illustrate examples of controlling a display 70 to display information, for example, in the circumstances illustrated in FIG 8. The apparatus 10 is configured to control the display 70 to display an indication of quality measurements made at the apparatus 10.

FIG 10A illustrates an apparatus 10 configured to display a received signal strength indicator 72ᵢ aligned with a respective direction of a directional antenna 40ᵢ. For example, the highest signal strength indicators 72 are for the antennas i=2 (to the base station 110_{B} and may also be dependent on effect of interference), for antenna i=4 (to jammer), for i=6 (to the relay station 110_{R1}) and for i=8 (to the relay station 110_{R2}).

The display 70 could for example only display signal strength indicator 72i for possible links. The highest signal strength indicators 72 would then be for the antennas i=2 (to the base station 110_{B} but not including effect of interference), for i=6 (to the relay station 110_{R1}) and for i=8 (to the relay station 110_{R2}). The effects of the noise from the interferer and from the jammer are not displayed. Alternatively, in addition to the information displayed in FIG 10A, additional information can be displayed identifying noise.

FIG 10B is the same as FIG 10A except that it additionally displays a noise indication 74 aligned with respective directional antennas 40. For example, the noise indicator 74 indicates the presence of noise at the antennas i=3 (interferer 200) and i=4 (jammer 202). In this example, segments that are unavailable for links 102 because of noise are indicated. The apparatus 10 is therefore configured to display information about available sidelinks 102.

In addition, a, or alternatively the apparatus 10 can control the display 70 to provide a visual indication 76 of the radiation pattern 50 of a directional antenna 40. The visual indication 76 can, for example, be aligned with its associated directional antenna 40. The visual indication 76 can for example indicate a principal direction and an angular spread of the radiation pattern i.e. indicate what sector is covered by the directional antenna 40. An example of a visual indication 76 of a radiation pattern 50 is illustrated in FIG 9 on the display 70. Also illustrated for the purposes of comparison is an image of the actual radiation pattern 50 of the associated directional antenna 40. The visual indication 76 can, for example be displayed for a directional antenna 40 if it is selected for data communication based on the quality measurements. The selected/active directional antenna 40 can be indicated by visually representing the antenna radiation pattern pointing in the direction of the active directional antenna 40 using the visual indication 76. This displays a direction of maximum gain for radiation patterns of directional antennas 40 used for data communication. Thus, the control circuitry 20 is configured to display information in dependence upon the received quality measurements and/or the directional antenna selection.

The information can be displayed in a sectorized format, where each sector associated with a directional antenna 40 is controlled to provide (or not provide) a visual indication 74, 76 dependent upon the radio environment of that directional antenna. The display 70 can for example be mounted on an upper face of the apparatus 10, for example as illustrated in FIG 9. In other examples, the display 70 can be located remote from the apparatus 10.

The apparatus 10 can be configured to use the display 70 to provide runtime visualizations of the radio environment 100, this also provides real-time visualization of the consequence of changing the radio environment 100. The parameters measured and/or visualized can be stored in a memory as a log.

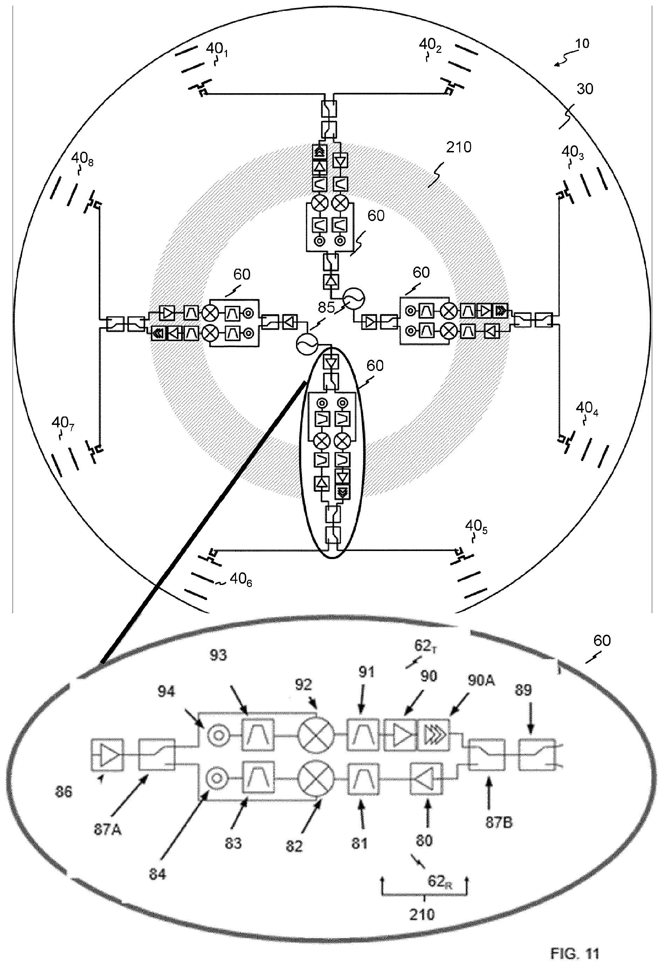

FIG 11 illustrates an example of the apparatus10 as previously described. The apparatus 10 comprises:
a planar printed circuit board 30 comprising at least radio frequency circuitry 60;
a plurality of directional antennas 40 that have radiation patterns 50 (not illustrated) that cover a respective plurality of partially overlapping sectors that extend outwardly from the printed circuit board 30;
control circuitry 20 (not illustrated) for controlling a discovery process for discovering availability of multiple radio links comprising means for:
   receiving a plurality of quality measurements for signals received via the respective plurality of directional antennas 40; and
   selecting one or more directional antennas 40 for communicating data via one or more radio links based on the plurality of quality measurements.

The radio frequency circuitry 60 is located close to the directional antennas 40. The directional antennas 40 are at a periphery of the planar circuit board 30. The radio frequency circuitry 60 extends outwardly towards the periphery.

In at least some examples, the radio frequency circuitry 60 can for example be configured to receive (RX) and/or transmit (TX) signals at a frequency in excess of 10GHz.

The radio frequency circuitry 60 comprises reception circuity 62_{R}. The reception circuity 62_{R} (receiver) is configured as a superheterodyne arrangement. The signal from the antenna 40 is amplified by an amplifier, for example a low noise amplifier 80, filtered by a band pass filter 81, down-mixed at mixer 82 to an intermediate frequency (IF), which is selectively filtered by filter 83 and provided to an output port 84. The mixer 82 receives an oscillating signal from a local oscillator (LO) 85 via a buffer 86.

The radio frequency circuitry 60 can comprise transmission circuity 62_{T}. The transmission circuity 62_{T} (transmitter) is configured as a superheterodyne arrangement. The signal from an input port 94 is filtered by a band pass filter 93, up-mixed at mixer 92 to a radio transmission frequency, which is selectively filtered by filter 91 and provided via an amplifier 90 (for example a power amplifier 90A) to the antenna 40 for transmission. The mixer 92 receives an oscillating signal from the local oscillator 85 via the buffer 86.

The local oscillators 85 can, for example, be a programmable local oscillator that provides a signal that oscillates at a programmable frequency and is configured for mixing between a target intermediate frequency and a target transmission/reception frequency that is, for example, in excess of 10GHz.

Each of the plurality of amplifiers 80, 90, 90A is associated with at least one of the plurality of directional antennas 40.

In the example illustrated but not necessarily all examples, one or more switches 87A, 87B are used to select whether the radio frequency circuitry 60 is used as reception circuity 62_{R} or as transmission circuity 62_{T}.

In the example illustrated but not necessarily all examples, one or more switches 89 are used to select which directional antenna 40 the radio frequency circuitry 60 is connected to.

In this example, four identical radio frequency front end chains (radio frequency circuitry 60) are each connected to two directional antennas 40.

A local oscillator 85 (LO) is shared between two radio-chains (radio frequency circuits 60) such that reception or transmission on two separate frequencies simultaneously is possible.

The component placement and the antenna placement allows all radio frequency routing to occur on one layer of the planar circuit board 30.

High RF isolation between the different radio frequency circuitry 60 is achieved. Channel reciprocity between uplink (transmission) and downlink (reception) is achieved by using the same antenna in both directions

The used RF switches 87A, 87B, 89 are, in this example, absorptive. They are providing a 50-ohm load to the "not connected" switch port and the isolation is also quite high (50 dB). The not connected and not used switch ports are terminated into 50 ohm such that the amplifiers are always loaded with 50 ohms. MEMS (Micro Electro Mechanical Switches) or mechanical relays and similar can also be used to implement the RF switches 87A, 87B, 89.

The TX IF filter 93 as well as the RX IF filter 83 can be implemented using low pass filters however band pass filters can also be used depending on the choice of IF frequency, signal bandwidth and the performance of the hardware and the interface to the remaining system.

In some but not necessarily all examples, all components in the radio frequency circuit 60 can be integrated into silicon on chip except the amplifiers 90, 90A, 80 and filters 83, 93, 91, 81.

There is a low noise figure due to the close proximity between the antenna feed and the LNA input and due to there being no phase shifters present.

In some but not necessarily all examples, the amplifiers 90, 90A, 80 associated with a directional antenna 40 remain powered on irrespective of whether or not the associated antenna is selected for data communication. This enables fast switching.

A circular heat sink as described above may be included such that the heat sink is mounted exactly where the most heat dissipating components are located on the circuit board 30.

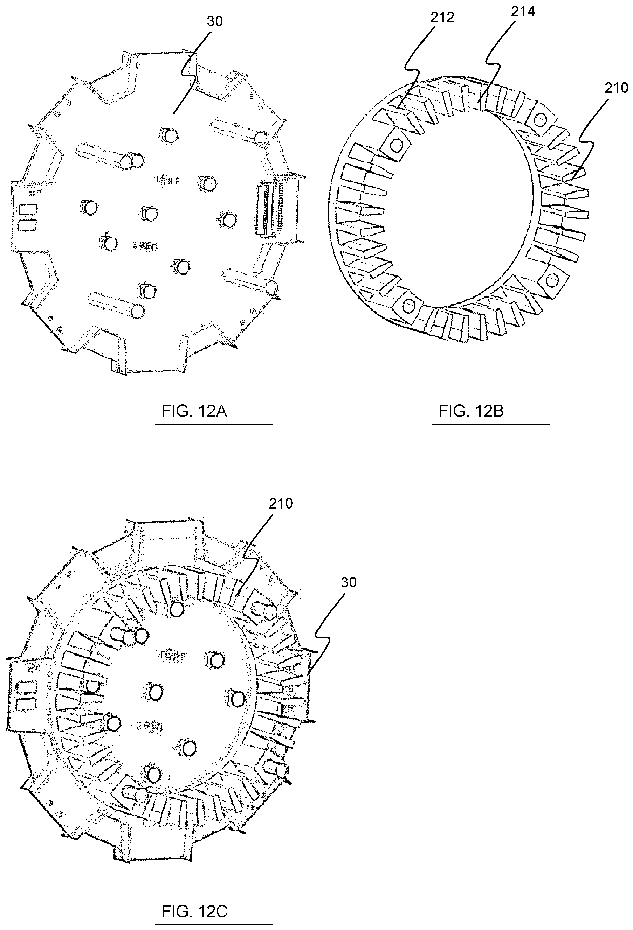

Examples of a heat sink 210 are illustrated in FIGs 6A-6D, 7 as described above and also in FIGs 12A to 12C.

In these examples, the heat sink 210 is a continuous heat sink aligned with the amplifiers 80, 90, 90A of the radio frequency circuits 60. In these examples, the heat sink 210 is a rotationally symmetric arrangement. In these examples, the heat sink 210 is circular.

FIG 12A illustrates an example of a planar circuit board 30. The FIG illustrates a bottom surface of the planar circuit board 30. The upper surface can be as illustrated in FIGs 5, 6, 12B or 12C, for example.

FIG 12B illustrates an example of a heat sink for attachment to the bottom surface of the planar circuit board 30. The heat sink comprises an annular base 212 that has a width extending between a circular outer edge and a circular inner edge. The annular base 212 is flat. Fins 214 extend outwardly from the base 212 substantially perpendicularly to a plane of the flat annular base 212. The fins 214 are arranged in spaced separation around the circumferential length of the annular base 212. The spacing between the fins is even. The fins 214 extend across the width of the base 12. The fins are aligned to a radial direction.

FIG 12C illustrates an example of a planar circuit board 30 with attached heat sink 210. In this example, the circuit board 30 and the heat sink 210 comprise mechanical devices to ensure correct alignment. For example, the circuit board 30 has perpendicularly extending cylindrical bosses that are received within apertures in the heat sink 210.

As illustrated in FIG 11, the amplifiers 80, 90, 90A can be positioned over the heat sink 210. The other radio frequency circuitry 60 can, for example, be positioned within an area that does not overlap the heat sink 210.

As illustrated in FIG 9, the heat sink 210, a fan (not illustrated), the circuit board 30, as well as a mechanical stand support 220 can be combined into one unit that is optimized for low thermal resistance and optimum heat transfer to ambient atmosphere.

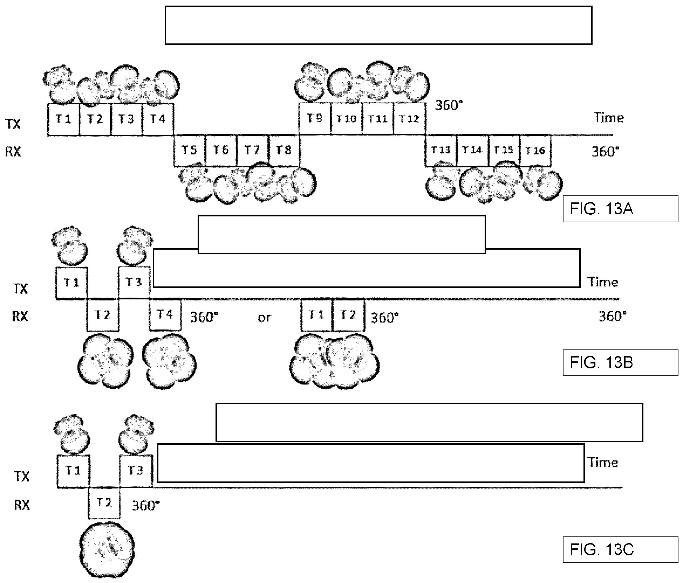

FIGs 13A, 13B, 13C illustrate different operational examples of an apparatus 10. In these examples, it is assumed that only one directional antenna 40 can be used at a time for transmission (Tx) to maintain isolation between the directional antennas 40. Therefore, each time slot Tn used for transmission is associated with a single directional antenna.

In these examples, there are eight directional antennas 40. In all these examples, the eight (8) Tx channels are not simultaneous (8x1). In FIG 13A, the eight (8) Rx channels are not simultaneous (8x1). In FIG 13B, the eight (8) Rx channels are x4 simultaneous (4x2). In FIG 13B, the eight (8) Rx channels are x8 simultaneous (8x1).

In the example of FIG 13A there is a single transceiver chain (one radio frequency circuit 60) shared by eight directional antennas 40. Therefore, only a single directional antenna 40 is used in each time slot for reception. There is in effect one Rx (receiver) and one Tx (transmitter) switched to N antennas 40. The eight directional antennas 40 are used in time slots T5-T8 and T13-16 for reception only with one directional antenna 40 used in each of those time slots. The eight directional antennas 40 are used in time slots T1-T4 and T9-12 for transmission only with one directional antenna 40 used in each of those time slots.

In the example of FIG 13B there are four transceiver chains (four radio frequency circuits 60). Each radio frequency circuit 60 is shared by a different pair of eight directional antennas 40. Therefore, only a single directional antenna 40 of each radio frequency circuit 60 is used in each time slot for transmission. Only four directional antennas 40 (one for each radio frequency circuit 60) are used in each time slot for reception. There is in effect N receivers and N transmitters for N antennas 40. The eight directional antennas 40 are used in two time slots with four different directional antennas 40 used in each of those time slots.

In the example of FIG 13C there are eight transceiver chains (eight radio frequency circuits 60). Each radio frequency circuit 60 is dedicated to one directional antenna 40. The directional antenna 40 of each radio frequency circuit 60 can be used in each time slot for reception. Therefore, all eight directional antennas 40 (one for each radio frequency circuit 60) are used in each time slot for reception. In this example, there can be N Rx and 1 Tx for N antenna 40. The eight directional antennas 40 are used in one time slot with eight directional antennas 40 used in that time slot.

There may be other numbers/combinations of antennas used per timeslot.

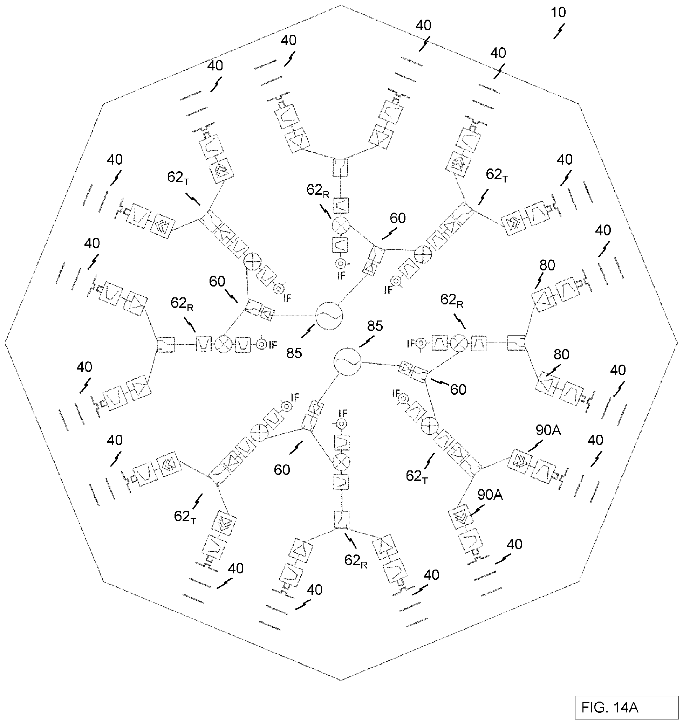

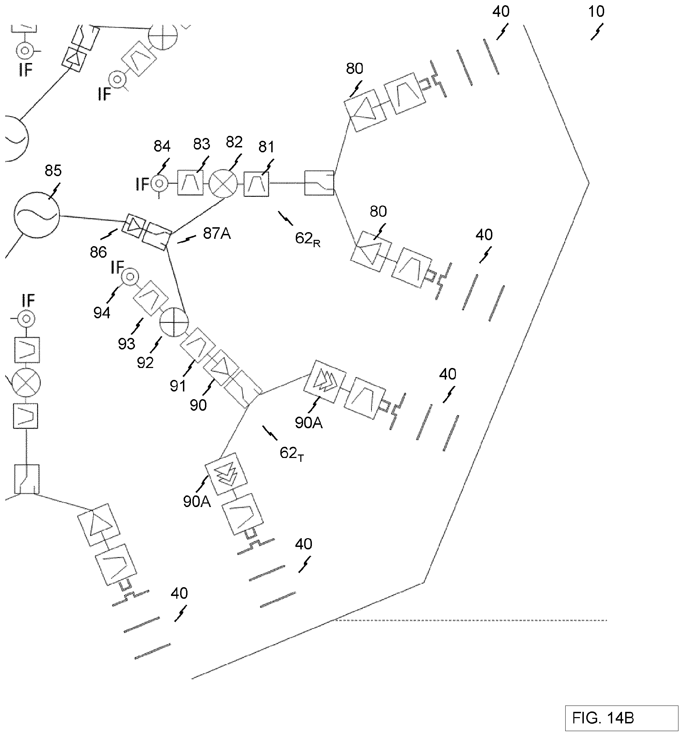

FIGs 14 to 21 illustrates various different examples of the apparatus 10. The various different examples will be described in terms of differences to the apparatus 10 illustrated in FIG 11.

The apparatus 10 comprises radio frequency circuits 60 that can include a transmitter chain (transmission circuit 60_{T}) and a receiver chain (receiver circuit 60_{R}).

In FIG 11, the apparatus has eight directional antennas 40. Each of the eight directional antennas 40 is used for time-divided transmission and reception. There are four radio frequency circuits 60 that each include a transmitter chain (transmission circuit 60_{T}) and a receiver chain (receiver circuit 60_{R}). Each of the four radio frequency circuits 60 selectively uses one of a different pair of directional antennas 40. The four radio frequency circuits 60 are located on the same side of the planar circuit board 30. There are two local oscillators 85. Each local oscillator is shared by two radio frequency circuits 60.

In FIG 14A, the apparatus 10 has eight pairs of directional antennas 40. FIG 14B is an enlarged view of a part of the apparatus 10 illustrated in FIG 14A. There are no switches between the amplifiers and the antennas. This improves transmit and receive performance because less radio frequency losses are incurred than if switches were present.

In some examples, the ports of the antenna and amplifier are in close proximity. This can reduce frequency losses. In at least some examples, close proximity means that a distance between the ports of the antenna and amplifier is less than one wavelength of the resonant frequency. In at least some examples, close proximity means that a distance between the ports of the antenna and amplifier is less than 3mm or other limited determined by available manufacturing techniques. At 100GHz it is possible that the antennas will be integrated on the RFIC/chip (in this case we could be talking about fractions of a wavelength or mm).

Each pair of directional antennas includes a directional antenna 40 for transmission and a directional antenna 40 for reception. Each of the sixteen directional antennas 40 can be used continuously and simultaneously. There are four radio frequency circuits 60 that each include a transmitter chain (transmission circuit 60_{T}) and a receiver chain (receiver circuit 60_{R}). Each of the four transmitter circuits 60_{T} uses a different pair of directional antennas 40. Each of the four receiver circuits 60_{R} uses a different pair of directional antennas 40. The four radio frequency circuits 60 are located on the same side of the planar circuit board 30. There are two local oscillators 85. Each local oscillator is shared by two radio frequency circuits 60.

The reception circuity 62_{R} (receiver) is configured as a superheterodyne arrangement. The signal from the antenna 40 is amplified by an amplifier, for example a low noise amplifier 80, filtered by a band pass filter 81, down-mixed at mixer 82 to an intermediate frequency (IF), which is selectively filtered by filter 83 and provided to an output port 84. The mixer 82 receives an oscillating signal from a local oscillator 85 via a buffer 86.

The transmission circuity 62_{T} (transmitter) is configured as a superheterodyne arrangement. The signal from an input port 94 is filtered by a band pass filter 93, up-mixed at mixer 92 to a radio transmission frequency, which is selectively filtered by filter 91 and provided via an amplifier 90 (for example a power amplifier 90A) to the antenna 40 for transmission. The mixer 92 receives an oscillating signal from the local oscillator 85 via the buffer 86.

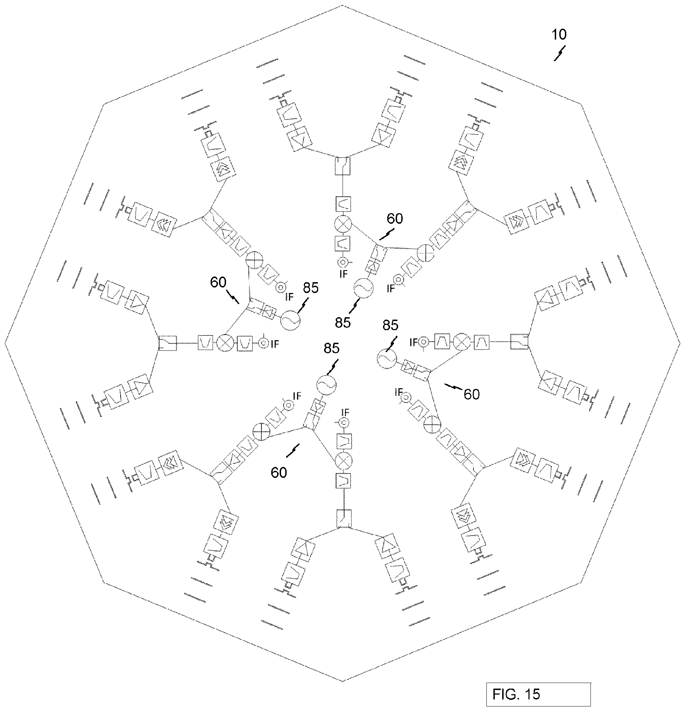

FIG 15 is similar to FIG 14. However, there are four local oscillators 85 one for each radio frequency circuit 60. Multiple local oscillators enable simultaneous use of different frequency channels.

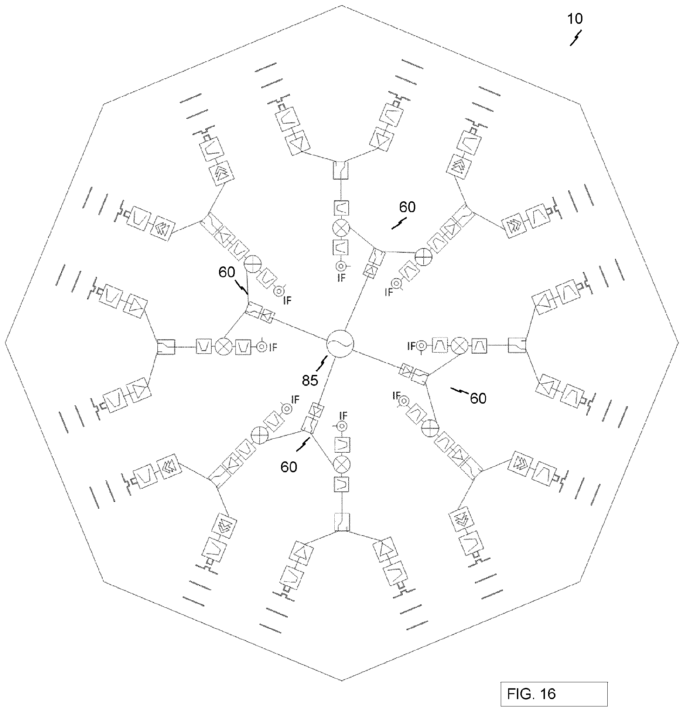

FIG 16 is similar to FIG 14. However, there is one local oscillator 85 shared by the four radio frequency circuits 60. Simultaneous transmission and/or reception at different frequencies is not possible. A single local oscillator 85 enables only a single radio frequency transmission or reception.

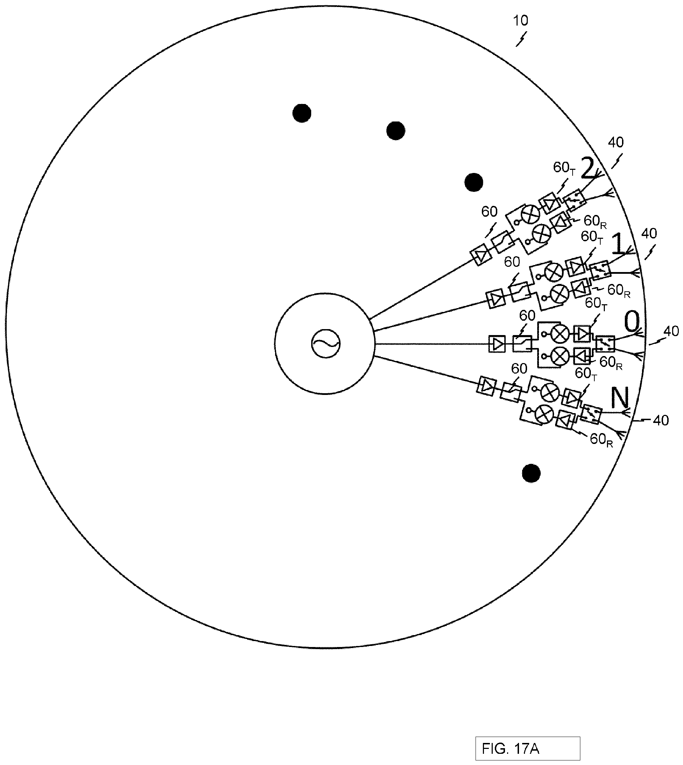

In FIG 17A, the apparatus has N directional antennas 40. Each of the N directional antennas 40 is used for time-divided transmission and reception. There are N radio frequency circuits 60 that each include a transmitter chain (transmission circuit 60_{T}) and a receiver chain (receiver circuit 60_{R}). Each of the N radio frequency circuits 60 uses a different directional antenna 40. The N radio frequency circuits 60 are located on the same side of the planar circuit board 30. There is one local oscillator 85 shared by the N radio frequency circuits 60.

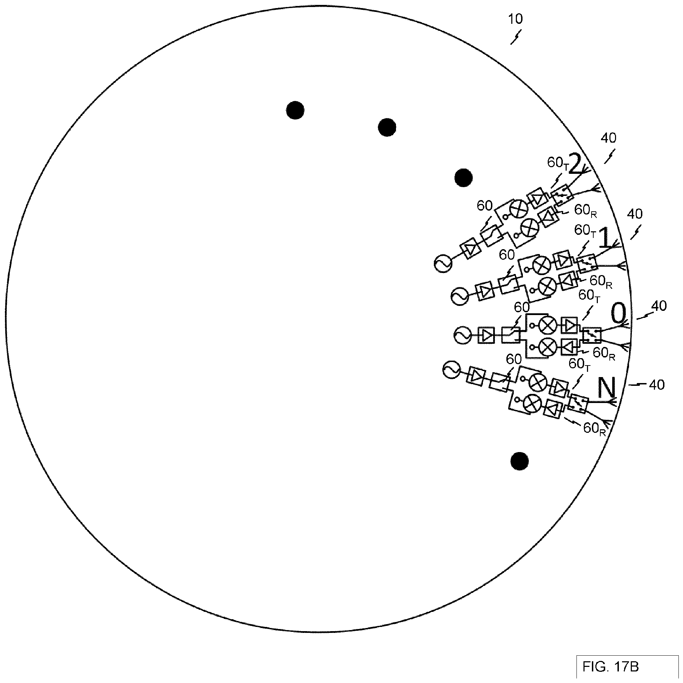

In FIG 17B, the apparatus is similar to that illustrated in FIG 17A. However, there are N local oscillators - one for each of the N radio frequency circuits 60.

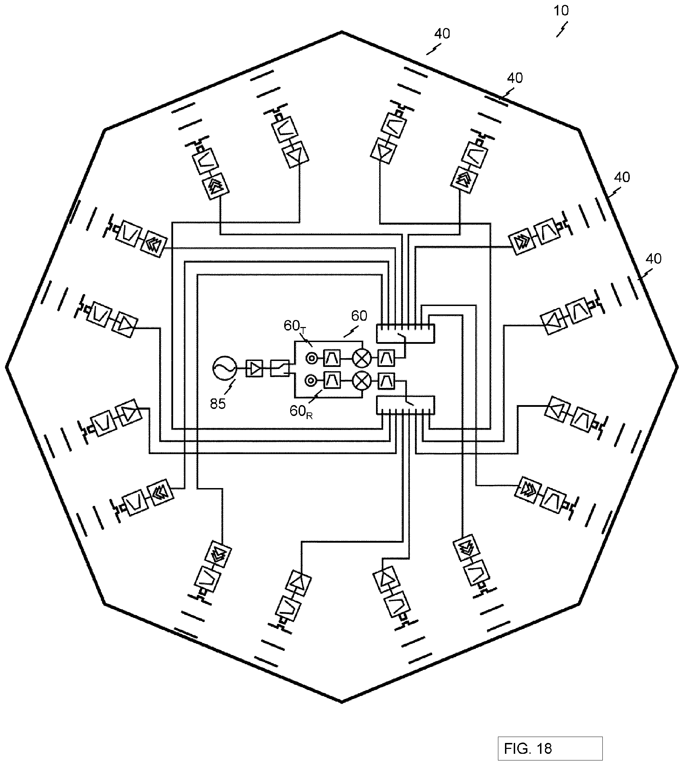

In FIG 18, the apparatus 10 has eight pairs of directional antennas 40. Each pair of directional antennas 40 includes an antenna 40 for transmission and an antenna 40 for reception. Each of the sixteen directional antennas 40 can be used continuously and simultaneously. There is one radio frequency circuit 60 that includes a transmitter chain (transmission circuit 60_{T}) and a receiver chain (receiver circuit 60_{R}). There is a single local oscillator 85. The one radio frequency circuit 60 can be connected to any of the sixteen antennas 40. The routing of transmission lines from the radio frequency circuit 60 to the respective directional antennas 40 overlap, therefore a multilayer planar circuit board 30 is required.

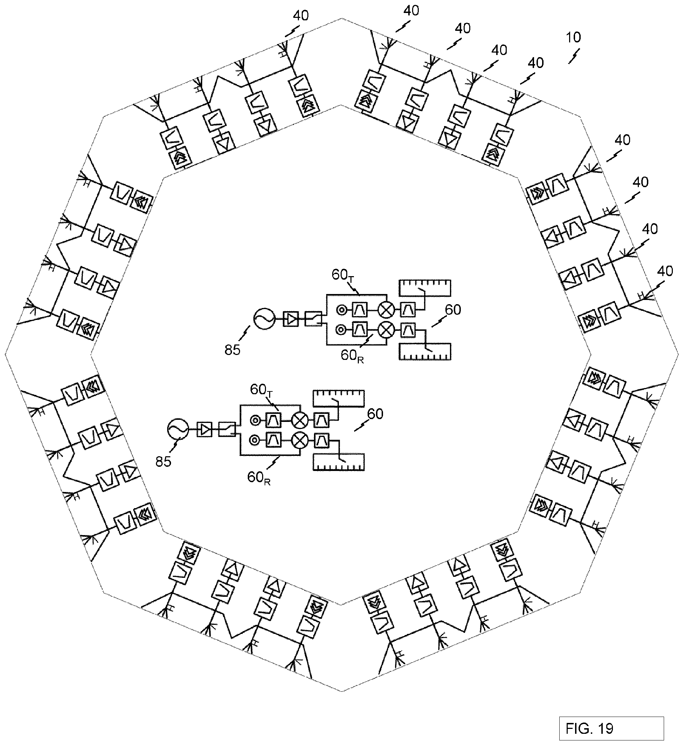

In FIG 19, the apparatus 10 is similar to that illustrated in FIG 18 except that there is an additional radio frequency circuit 60 that includes a transmitter chain (transmission circuit 60_{T}) and a receiver chain (receiver circuit 60_{R}). The additional radio frequency circuit 60 has its own local oscillator 85. The additional radio frequency circuit 60 can be connected to any of the RF circuits, for example low noise amplifiers, filters, power amplifiers, that lead to the sixteen antennas 40 (the connections are not shown in Figure 19 for simplicity/clarity). The routing of transmission lines from the radio frequency circuits 60 to the respective directional antennas 40 overlap, therefore a multilayer planar circuit board 30 is required. There is support for 2XMIMO in uplink and downlink.

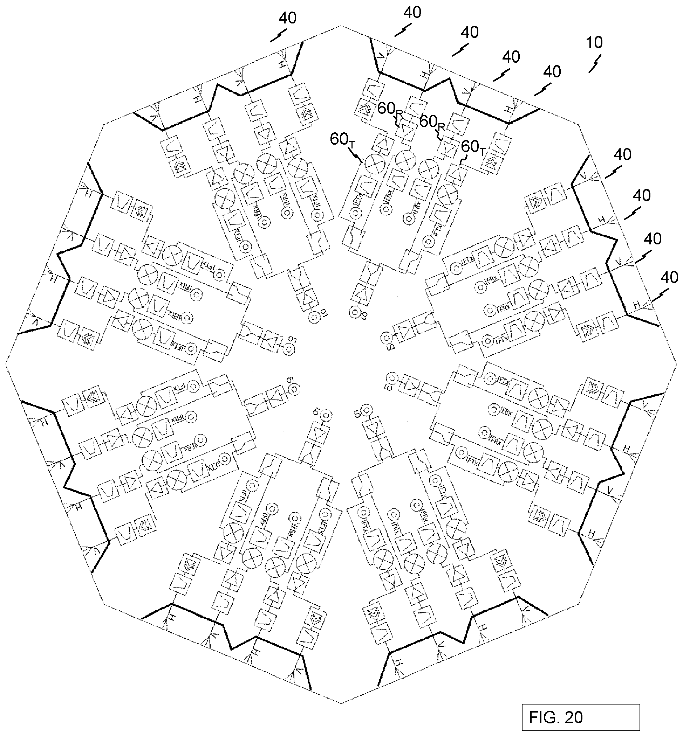

In FIG 20, the apparatus 10 operates in two different polarizations. There is a set of directional antennas 40 for one polarization (H, or horizontal) and a different set of directional antennas 40 for the other polarization (V, or vertical). In each of the eight different directions there is an antenna for Tx (V) associated with a transmitter circuit 60_{T}, an antenna for Tx (H) associated with a different transmitter circuit 60_{T}, an antenna for Rx (V) associated with a receiver circuit 60_{R}, an antenna for Rx (H) associated with a different receiver circuit 60_{R} and a local oscillator 85 that can be switched into any of the mixers of the transmitter or receiver circuits 60_{T}, 60_{R}. 2XMIMO in all 8 directions is supported.

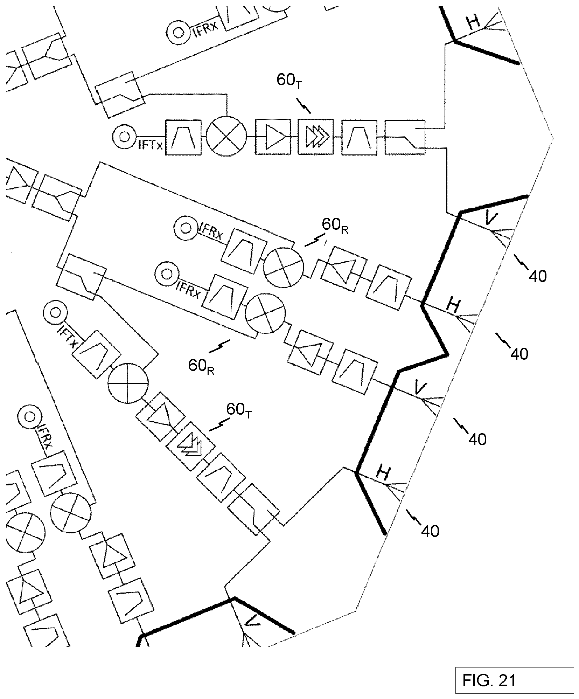

In FIG 21, the apparatus 10 operates in two different polarizations in a manner similar to FIG 20. There is a set of directional antennas 40 for one polarization (H) and a different set of directional antennas 40 for the other polarization (V). In each of the eight different directions there is an antenna for Tx (V) associated with a transmitter circuit 60_{T}, an antenna for Tx (H) associated with a different transmitter circuit 60_{T}, an antenna for Rx (V) associated with a receiver circuit 60_{R}, an antenna for Rx (H) associated with a different receiver circuit 60_{R}. Each of the transmitter circuits 60_{T} is shared with a directional antenna for a different direction and different polarization. A local oscillator 85 that can be switched into any of the mixers of one of the transmitter circuits 60_{T} or both the receiver circuits 60_{R}. MIMO is supported in the receive direction, and also the transmit direction. The benefit of the example in Figure 21 is that we save the number of power amplifiers is reduced by half compared to the circuit of Figure 20, however, at the expense of an additional RF switch.

It will therefore be appreciated from the foregoing examples that:
The number of local oscillators 85 (and thus the possibility to use different frequencies in different directions) can be changed. Directional antennas 40 can be shared for transmission and reception or different directional antennas 40 can be used for transmission and reception. The number of receiver chains 60R and/or transmitter chains 60T can be changed. Any suitable arrangement of directional antennas 40 can be used, for example, to provide omnidirectional coverage. The number of directional antennas 40 can be changed. The beam width and gain of the directional antennas 40 can be changed.

Where a structural feature has been described, it may be replaced by means for performing one or more of the functions of the structural feature whether that function or those functions are explicitly or implicitly described.

In some but not necessarily all examples, the apparatus 10 is configured to communicate data from the apparatus 10 with or without local storage of the data in a memory at the apparatus 10 and with or without local processing of the data by circuitry or processors at the apparatus 10.

The data may, for example, be measurement data or data produced by the processing of measurement data.

The data may be stored in processed or unprocessed format remotely at one or more devices. The data may be stored in the Cloud.

The data may be processed remotely at one or more devices. The data may be partially processed locally and partially processed remotely at one or more devices.

The data may be communicated to the remote devices wirelessly via short range radio communications such as Wi-Fi or Bluetooth, for example, or over long-range cellular radio links. The apparatus may comprise a communications interface such as, for example, a radio transceiver for communication of data.

The apparatus 10 may be part of the Internet of Things forming part of a larger, distributed network.

The processing of the data, whether local or remote, may be for the purpose of health monitoring, data aggregation, patient monitoring, vital signs monitoring or other purposes.

The processing of the data, whether local or remote, may involve artificial intelligence or machine learning algorithms. The data may, for example, be used as learning input to train a machine learning network or may be used as a query input to a machine learning network, which provides a response. The machine learning network may for example use linear regression, logistic regression, vector support machines or an acyclic machine learning network such as a single or multi hidden layer neural network.

The processing of the data, whether local or remote, may produce an output. The output may be communicated to the apparatus 10 where it may produce an output sensible to the subject such as an audio output, visual output or haptic output.

The radio frequency circuitry and the directional antennas 40 may be configured to operate in one or more operational resonant frequency bands. For example, the operational frequency bands may include (but are not limited to) the bands specified in the current release of 3GPP TS 38.101.

A frequency band over which the directional antennas 40 can efficiently operate is a frequency range where the directional antenna's return loss (-20 log₁₀|S11|) is more negative than an operational threshold and insertion loss (-20log₁₀|S21|) is less negative than an operational threshold value.

As used here 'module' refers to a unit or apparatus that excludes certain parts/components that would be added by an end manufacturer or a user. The circuit board 30 can be a module. The control circuitry 20 can be a module. The display 70 can be a module.

The control circuitry 20 can be a controller. The control circuitry 20 can be implemented in hardware alone, have certain aspects in software including firmware alone or can be a combination of hardware and software (including firmware).

The control circuitry can be implemented using instructions that enable hardware functionality, for example, by using executable instructions of a computer program in a general-purpose or special-purpose processor that may be stored on a computer readable storage medium (disk, memory etc) to be executed by such a processor.

The processor can be configured to read from and write to a memory. The processor can also comprise an output interface via which data and/or commands are output by the processor and an input interface via which data and/or commands are input to the processor.

The memory can store a computer program comprising computer program instructions (computer program code) that controls the operation of the apparatus 10 when loaded into the processor. The computer program instructions, of the computer program, provide the logic and routines that enables the apparatus to perform the methods illustrated and described. The processor by reading the memory is able to load and execute the computer program.

The apparatus 10 can therefore comprise:
at least one processor; and
at least one memory including computer program code
the at least one memory and the computer program code configured to, with the at least one processor, cause the apparatus 10 at least to perform:
   controlling a discovery process for discovering availability of multiple radio links 102 comprising:
   receiving a plurality of quality measurements for signals received via a respective plurality of directional antennas 40; and
   selecting directional antennas 40 for communicating data via radio links 102 based on the plurality of quality measurements.

The plurality of directional antennas 40 can have radiation patterns 50 that cover a respective plurality of partially overlapping sectors that extend outwardly from the printed circuit board 30.

The computer program can arrive at the apparatus 10 via any suitable delivery mechanism. The delivery mechanism may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program. The delivery mechanism may be a signal configured to reliably transfer the computer program. The apparatus 10 may propagate or transmit the computer program] as a computer data signal.

Computer program instructions for causing an apparatus to perform at least the following or for performing at least the following:
controlling a discovery process for discovering availability of multiple radio links 102 comprising:
receiving a plurality of quality measurements for signals received via a respective plurality of directional antennas 40; and
selecting directional antennas 40 for communicating data via radio links 102 based on the plurality of quality measurements.

The computer program instructions may be comprised in a computer program, a non-transitory computer readable medium, a computer program product, a machine readable medium. In some but not necessarily all examples, the computer program instructions may be distributed over more than one computer program.

The memory can be implemented as one or more separate components/circuitry some or all of which may be integrated/removable and/or may provide permanent/semi-permanent/ dynamic/cached storage.

The processor can be implemented as one or more separate components/circuitry some or all of which may be integrated/removable. The processor may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The apparatus 10 can be configured as at least one of: a base station, an access point, a relay station, an apparatus for Industrial Internet of Things (IIoT), a moving robot, an unmanned aerial vehicle (UAV), a data acquisition system, or a transmission/reception point. The apparatus 10 can be configured as a stationary electronic device, meaning that the device is disposed in a building or on a tower/mast or other stationary structure so that the device does not move during operation. The apparatus 10 can be configured as a stationary electronic device such as, and not limited to: a base station, an access point, a relay station, an IIoT apparatus, a data acquisition system or a transmission/reception point.

The apparatus 10 can be configured as a portable electronic device. Alternatively, the apparatus 10 can be configured as a movable electronic device. The apparatus 10 can be configured as a portable or movable electronic device, or disposed on or in a portable or movable electronic device such as, and not limited to: a moving robot, an unmanned aerial vehicle (UAV), a vehicle (car, aircraft, motorcycle, vessel, bicycle, as non-limiting examples), a smartphone or mobile phone, a portable computing device, and a tablet.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising
a planar printed circuit board comprising at least receiver circuitry;
a plurality of directional antennas, wherein the plurality of directional antennas are configured to provide radiation patterns covering a respective plurality of partially overlapping sectors that extend outwardly from the printed circuit board;
control circuitry for controlling a discovery process for discovering availability of multiple radio links comprising means for:
receiving a plurality of quality measurements for signals received via the respective plurality of directional antennas; and
selecting directional antennas for communicating data via radio links based on the plurality of quality measurements.

2. An apparatus as claimed in claim 1, wherein the plurality of directional antennas have radiation patterns that have fixed directions relative to the planar printed circuit board that are not altered by phase control.

3. An apparatus as claimed in claim 1 or 2, wherein the plurality of directional antennas have a common configuration except for position and orientation.

4. An apparatus as claimed in claim 1, 2 or 3, wherein the plurality of directional antennas have a Yagi-Uda configuration and comprise a feed element, at least one reflector element and at least one director element.

5. An apparatus as claimed in any preceding claim, wherein the plurality of directional antennas are arranged on the planar printed circuit board to have N-fold rotational symmetry about an axis that is orthogonal to a plane of the planar printed circuit board.

6. An apparatus as claimed in any preceding claim, wherein the quality measurements for signals received are received signal strength measurements or parameters dependent upon received signal strength measurements.

7. An apparatus as claimed in any preceding claim, wherein selecting directional antennas for communicating data via radio links based on the plurality of quality measurements comprises:
selecting an antenna that is best for receiving a received structured signal transmitted by a transmitter, for receiving structured signals transmitted by the transmitter.

8. An apparatus as claimed in any preceding claim, wherein selecting directional antennas for communicating data via radio links based on the plurality of quality measurements comprises:
preventing selection of an antenna that receives noise above a threshold level.

9. An apparatus as claimed in any preceding claim further comprising a display, wherein the control circuitry is configured to display information in dependence upon the received quality measurements and/or the antenna selection.

10. An apparatus as claimed in any preceding claim further comprising a display, wherein the control circuitry is configured to display a direction of maximum gain for radiation patterns of directional antennas used for data communication.

11. An apparatus as claimed in any preceding claim further comprising a plurality of amplifiers each being associated with at least one of the plurality of directional antennas.

12. An apparatus as claimed in claim 11, wherein amplifiers of the directional antennas remain powered on irrespective of whether or not the antenna associated with an amplifier is selected for data communication.

13. An apparatus as claimed in claim 11 or 12, comprising a continuous heat sink aligned with the amplifiers.

14. An apparatus as claimed in any preceding claim configured as at least one of: a base station, an access point, a relay station, an apparatus for Industrial Internet of Things, a moving robot, an unmanned aerial vehicle, a data acquisition system, and a transmission/reception point.

15. A portable electronic device or a stationary electronic device comprising the apparatus of any preceding claim.
